Europäisches Patentamt

European Patent Office

Office européen des brevets

(19)

(11) Numéro de publication : **0 280 623 B1**

## (12) FASCICULE DE BREVET EUROPEEN

(45) Date de publication du fascicule du brevet :
17.07.91 Bulletin 91/29

(51) Int. Cl.⁵ : **C09C 1/30, C01B 33/193**

(21) Numéro de dépôt : 88400402.9

(22) Date de dépôt : 23.02.88

(54) **Nouvelles silices de précipitation à faible reprise en eau leur procédé de préparation et leur application au renforcement des élastomères silicones.**

(30) Priorité : 25.02.87 FR 8702478

(43) Date de publication de la demande :
31.08.88 Bulletin 88/35

(45) Mention de la délivrance du brevet :
17.07.91 Bulletin 91/29

(84) Etats contractants désignés :
AT BE CH DE ES FR GB GR IT LI LU NL SE

(56) Documents cités :
EP-A- 0 018 866
FR-A- 1 056 218
FR-A- 1 111 969
FR-A- 2 075 083

(73) Titulaire : RHONE-POULENC CHIMIE
25, quai Paul Doumer
F-92408 Courbevoie Cédex (FR)

(72) Inventeur : Billion, Jacques
Route du Port Neuf
F-01800 Saint Jean de Niost (FR)
Inventeur : Chevallier, Yvonnick
19, allée des Géraniums
F-69150 Decines (FR)
Inventeur : Morawski, Jean-Claude
10, rue des Primevères
F-69680 Chassieu (FR)

(74) Mandataire : Dubruc, Philippe et al
RHONE-POULENC INTERSERVICES Service
Brevets Chimie 25, quai Paul-Doumer
F-92408 Courbevoie Cédex (FR)

## Description

La présente invention concerne de nouvelles silices de précipitation à faible reprise en eau, un procédé de préparation de ces silices ainsi que leur application au renforcement des élastomères silicones ou des pâtes silicones.

On sait que l'on utilise les silices de combustion notamment comme charge renforçante dans les compositions organopolysiloxaniques vulcanisables. Les silices de combustion ont toutefois l'inconvénient de présenter un prix élevé.

Depuis de nombreuses années, on cherche donc à remplacer au moins partiellement ces silices de combustion par des silices de précipitations d'un prix moindre. On a proposé divers procédés de préparation de silices de précipitation, procédés complexes selon lesquels on règle durant la préparation la température, les concentrations en réactifs, la valeur du pH... (Brevet français FR-A-1 352 354).

On a cherché par ailleurs à améliorer les qualités d'agent de renforcement des silices de précipitation pour les applications silicones en rendant les silices hydrophobes par un traitement de surface approprié (emploi par exemple de silane ou de silazane). Des silices hydrophiles rendues hydrophobes par un tel traitement et utilisables pour les applications silicones sont par exemple décrites dans le brevet français FR-A-2 356 596. Toutefois, ces traitements rendent les procédés relativement coûteux.

On a décrit aussi une silice de précipitation améliorée utilisable au renforcement des élastomères organopolysiloxaniques (Conférence Internationale du Caoutchouc KIEV 10-14 Octobre 1978). Ces silices de précipitation peuvent présenter des propriétés intéressantes, toutefois elles s'avèrent encore insuffisantes en ce qui concerne la reprise en eau, cette caractéristique étant essentielle dans toutes les applications en silicone, et surtout pour ce qui est des propriétés diélectriques des compositions obtenues, propriétés importantes dans des applications plus particulières telles que la câblerie.

Un premier objet de l'invention est donc la mise au point d'une silice de précipitation présentant une faible reprise en eau. Un second objet de l'invention est la mise au point d'une silice à faible reprise en eau et possèdant des caractéristiques de surface et de dispersibilité dans les élastomères silicones suffisantes pour leur utilisation comme charge renforçante dans ces élastomères.

Un troisième objet de l'invention est un procédé particulièrement simple et économique de préparation de silices de ce type.

Dans ce but, le procédé de préparation selon l'invention d'une silice à faible reprise en eau est caractérisé en ce qu'on fait subir à une première silice de précipitation un traitement thermique à une température comprise entre 700°C et 950°C pendant un temps compris entre une minute et 15 minutes.

Selon un mode de réalisation préférentiel de l'invention, on utilise, comme première silice, une silice se présentant sous forme de bille sensiblement sphérique de taille moyenne comprise entre 80 μm et 300 μm.

Par ailleurs, les silices de l'invention peuvent se présenter sous deux modes de réalisation.

Selon un premier mode ces silices présentent les caractéristiques suivantes :

— Surface BET : 100-350 m²/g,
— Surface CTAB : 100-350 m²/g,
— Reprise en eau : < 4,5%.

lesdites silices se présentant en outre sous forme de bille sensiblement sphérique de taille moyenne comprise entre 80 μm et 300 μm.

Selon un deuxième mode ces silices de précipitation, présentent les caractéristiques suivantes :

— Surface BET : 135-350 m²/g,
— Surface CTAB : 150-350 m²/g,
— Reprise en eau : < 4,5%.

Les silices selon l'invention, ou préparées selon le procédé ci-dessus, présentent une reprise en eau faible en combinaison avec des surfaces spécifiques importantes. Elles peuvent aussi avoir une densité faible qui rend très facile leur incorporation dans les compositions organopolysiloxaniques auxquelles elles confèrent une résistivité importante.

En outre, le procédé de préparation, basé essentiellement sur un traitement thermique, est particulièrement simple et se prête bien à une mise en oeuvre industrielle.

D'autres caractéristiques et avantages de l'invention seront mieux compris à la lecture de la description qui va suivre et d'exemples concrets mais non limitatifs qui vont être donnés.

Les silices de l'invention, pour les deux modes de réalisation, se caractérisent tout d'abord par leur surface BET. Cette surface BET est déterminée selon la méthode de BRUNAUER-EMMETT-TELLER décrite dans The Journal of the American Chemical Society vol. 60, page 309 — Février 1938.

Les silices de l'invention se caractérisent aussi par leur surface CTAB. Cette surface est déterminée par adsorption de bromure de cétyl-triméthylammonium à pH 9 selon la méthode de Jay-Jansen Kraus (Rubber Chemistry and Technology 44 (1971) p 1287-1296).

Par ailleurs, les silices de l'invention sont dans tous les cas caractérisées par une reprise en eau qui est d'au plus 4,5% et plus particulièrement d'au plus 3%.

Cette reprise en eau représente la quantité d'eau adsorbée par un échantillon de silice sous une humidité relative donnée.

Dans le cas présent la reprise en eau a été mesurée de la façon suivante :

Dans un premier temps l'échantillon subit une désorption à 120°C sous débit d'azote jusqu'à poids constant. Puis il est refroidi sous courant d'azote sec à 23°C. On fait ensuite passer sur l'échantillon de l'azote sec saturé en vapeur d'eau dans des conditions telles que la température de l'échantillon est toujours 23°C et l'humidité relative au niveau de l'échantillon de 64%. On mesure la reprise en poids de l'échantillon en pourcentage par rapport au produit sec.

D'autre part, les silices de l'invention présentent un certain nombre d'autres caractéristiques additionnelles.

Elles présentent ainsi une teneur en sodium résiduel d'au plus 1500 ppm et plus particulièrement inférieure à 1000 ppm. Cette teneur est mesurée par spectroémission de flamme après dissolution de la silice par l'acide fluorhydrique.

En outre, ces mêmes silices présentent une teneur en carbone inférieure à 2500 ppm et plus particulièrement inférieur à 500 ppm.

Dans le cas du premier mode de réalisation les silices présentent des surfaces BET et des surfaces CTAB comprises entre 100 et 350 m²/g.

Une autre caractéristique des silices selon ce premier mode de réalisation, est leur forme particulière à savoir une forme de bille sensiblement sphérique de taille moyenne comprise entre 80 μm et 300 μm.

Plus particulièrement, cette taille moyenne peut être comprise entre 150 μm et 300 μm et de préférence comprise entre 200 et 300 μm.

Enfin, les silices selon ce premier mode présentent une densité comprise entre 0,23 et 0,32.

Dans le cas du second mode de réalisation de l'invention, il s'agit des silices les plus adaptées pour le renforcement des élastomères silicones, celles-ci présentent une surface BET comprise entre 135 et 350 m²/g, une surface CTAB entre 150 et 350 m²/g.

Les silices de ce second mode ont une densité au plus égale à 0,3 et plus particulièrement d'au plus 0,15. Il s'agit comme précédemment de la densité à l'état tassée selon la norme AFNOR N° 030100.

Généralement le pH des silices de l'invention selon le deuxième mode est compris entre 3,5 et 7,5 et plus particulièrement entre 4,5 et 6,5. Il s'agit du pH mesuré sur une suspension de silice à 5% dans l'eau.

Enfin la taille des particules de ces mêmes silices estimée par refus au tamis de 45 μm est de préférence inférieure ou égale à 0,05%.

Le procédé de préparation des silices de l'invention va maintenant être décrit.

Le produit de départ du procédé est constitué par une silice de précipitation qui dans la suite du texte sera appelée première silice. Cette première silice peut avoir été préparée selon tout moyen connu notamment selon les procédés décrits dans les brevets français FR-A-2.471.947 et FR-A-2.562.534. Elle doit présenter les caractéristiques BET et CTAB et la teneur en sodium résiduel mentionnées plus haut.

Toutefois, selon un mode de réalisation préférentiel de l'invention, on utilise à titre de première silice un produit sous forme de billes ou de perles du type décrit dans le brevet européen EP-A-18 866 dont l'ensemble de l'enseignement est incorporé à la présente description.

Plus précisément, il s'agit d'une silice se présentant sous forme de billes sensiblement sphériques et de taille moyenne comprise entre 80 μm et 300 μm, plus particulièrement comprise entre 150 μm et 300 μm de préférence comprise entre 200 et 300 μm.

Cette première silice peut présenter en outre une densité à l'état tassée comprise entre 0,2 et 0,32, notamment comprise entre 0,23 et 0,32.

Elle se caractérise aussi par une surface BET comprise entre 100 et 350 m²/g.

La surface CTAB de cette première silice est elle aussi comprise entre 100 et 350 m²/g.

Cette première silice est préparée selon le procédé décrit dans le brevet européen EP-A-18 866, c'est-à-dire par atomisation d'une suspension issue d'une réaction de précipitation, cette suspension présentant un pH d'au moins 4, de préférence compris entre 4, 5 et 6, une teneur en matière sèche supérieure à 18% avantageusement comprise entre 20 et 25%. De préférence, cette suspension a une viscosité mesurée à un gradient de vitesse de 10³ seconde ⁻¹ comprise entre 100 et 1000 poises.

La silice est purifiée en sodium par un ou plusieurs traitements par de l'eau déminéralisée, ce traitement consistant à remettre en suspension dans l'eau déminéralisée le gâteau de silice obtenu après filtration de la suspension, et à filtrer de nouveau la suspension obtenue après ce traitement.

La caractéristique essentielle du procédé de l'invention est le traitement thermique. Celui-ci est mis en oeuvre à une température élevée, c'est-à-dire comprise entre 700°C et 950°C. Il se déroule pendant un temps compris entre une et quinze minutes de préférence entre deux et dix minutes.

Dans le cas général, c'est-à-dire avec une première silice de précipitation quelconque, la température sera comprise plus particulièrement entre 800°C et 900°C. Dans le cas d'une première silice sous forme de billes, on peut mentionner une température plus particulièrement comprise entre 700°C et 900°C.

Le traitement thermique est effectué dans tout appareillage convenable. On utilise généralement un four rotatif incliné.

Le procédé de l'invention peut comporter une étape supplémentaire qui consiste en une micronisation ou un broyage.

Cette étape a pour but d'abaisser la densité du produit. La micronisation peut être réalisée au moyen d'appareils du type JET-O-MIZER® et autres décrits dans Chemical Engineers Handbook de JH Perry 5ème édition, partie 8/83.

Le broyage sera réalisé selon tout moyen connu qui permet d'atteindre la granulométrie et la densité souhaitées.

Ce traitement sera mis en oeuvre essentiellement dans les cas où l'on veut obtenir un produit particulièrement apte à être utilisé au renforcement des élastomères silicones.

Les deux étapes traitement thermique, micronisation ou broyage peuvent se dérouler dans un ordre respectif quelconque.

Toutefois, selon un mode de réalisation préférentiel de l'invention, on effectue tout d'abord le traitement thermique et ensuite la micronisation. Ce mode opératoire est particulièrement avantageux dans le cas d'une première silice sous forme de billes, car cette forme facilite le traitement thermique.

On doit noter ici les résultats particulièrement surprenants obtenus à la suite du traitement thermique effectué sur la première silice, notamment sous forme de billes, décrite ci-dessus. Ces résultats sont surprenants pour deux raisons. Tout d'abord, la température élevée à laquelle on conduit le traitement thermique permet d'obtenir une valeur de la reprise en eau faible pour la silice ainsi traitée. Or, contrairement à ce que l'on aurait pu craindre malgré la haute température du traitement, la surface spécifique de la silice est conservée.

D'autre part dans le cas des billes de silice, ce même traitement thermique à température élevée aurait pu provoquer un durcissement très important des billes de départ. Or si ce durcissement se produit bien il reste relativement faible et en tout cas tel que le broyage ou la micronisation ultérieure du produit ne pose aucun problème pour une mise en oeuvre industrielle.

Les silices ainsi obtenues sont particulièrement adaptées à l'utilisation comme charge de compositions organosiliciques.

La nature des compositions organosiliciques pouvant après vulcanisation être renforcées par les silices précédemment décrites n'est pas critique. De manière générale, les compositions organosiliciques peuvent être de nature élastomères ou pâteuses.

Dans le cas des compositions élastomères, le polymère organosilicique mis en oeuvre et vulcanisable est tel que désignant par R les radicaux de nature hydrocarbonée liés aux atomes de silicium, le rapport entre le nombre total de radicaux R et le nombre total d'atomes de silicium, est compris entre 0,5 et 3. Dans la constitution du polymère organosilicique, les autres valences disponibles du silicium sont reliées à des hétéro-atomes tels que l'oxygène ou l'azote, ou bien à des radicaux hydrocarbonés multivalents.

Préférentiellement les compositions organosiliciques chargées selon l'invention sont des compositions organopolysiloxaniques dans lesquelles l'organopolysiloxane peut être linéaire ou ramifié, et éventuellement comporter en plus des radicaux hydrocarbonés des groupements réactifs comme par exemple des groupements hydroxyles, des groupements hydrolysables, des groupements alkényle, des atomes d'hydrogène....

Plus précisément les organopolysiloxanes constituants principaux des compositions selon l'invention sont constitués de motifs siloxaniques de formule générale :

$$R_n SiO_{\frac{4-n}{2}} \qquad (I)$$

éventuellement associés à des motifs siloxaniques de formule :

$$Z_x \ R_y \ SiO_{\frac{4-x-y}{2}} \qquad (II)$$

Dans ces formules les divers symboles ont la signification suivante :

— R représente un groupement de nature hydrocarbonée non hydrolysable, ce radical pouvant être :

— un radical alcoyle ou halogènoalkyle ayant de 1 à 5 atomes de carbone et comportant de 1 à 6 atomes de chlore et/ou de fluor.

— des radicaux cycloalcoyles et halogènocycloalcoyles ayant de 3 à 8 atomes de carbone et contenant de 1 à 4 atomes de chlore et/ou de fluor.

— des radicaux aryles, alcoylaryles et halogènoaryles ayant de 6 à 8 atomes de carbone et contenant de 1 à 4 atomes de chlore et/ou de fluor.

— des radicaux cyanoalcoyles ayant de 3 à 4 atomes de carbonate.

— Z = un atome d'hydrogène, un groupement alkenyle, un groupement hydroxyle, un atome hydrolysable, un groupement hydrolysable.

— n = un nombre entier égal à 0, 1, 2 ou 3

— x = un nombre entier égal à 0, 1, 2 ou 3

— y = un nombre entier inférieur ou égal à 2.

A titre illustratif, on peut citer parmi les radicaux organiques R, directement liés aux atomes de silicium :

Les groupes méthyle : éthyle ; propyle ; isopropyle ; butyle ; isobutyl ; $\alpha$-pentyle ; t-butyle ; chlorométhyle ; dichlorométhyle ; $\alpha$-chloroéthyle ; $\alpha,\beta$-dichloroéthyle ; fluorométhyle ; difluorométhyle ; $\alpha,\beta$-difluoroéthyle ; trifluoro-3,3,3 propyle ; trifluoro cyclopropyle ; trifluoro-4,4,4 butyle ; heptafluoro-3,3,4 4,5,5 pentyle ; $\beta$-cyanoéthyle ; $\gamma$-cyanopropyle : phényle ; p-chlorophényle ; m-chlorophényle ; dichloro-3,5 phényle ; trichlorophényle ; tétrachlorophényle ; o–, p–, ou m-tolyle ; $\alpha,\alpha,\alpha$-trifluorotolyle ; xylyles comme diméthyl-2,3 phényle ; diméthyl-3,4 phényle.

Préférentiellement les radicaux organiques liés aux atomes de silicium sont des radicaux méthyle, phényle, vinyle, ces radicaux pouvant être éventuellement halogénés ou bien encore des radicaux cyanoalkyle.

Les symboles Z peuvent être des atomes d'hydrogène, des atomes de chlore, des groupements vinyles, des groupements hydroxyles ou des groupements hydrolysables tels que : amino, amido, aminoxy, oxime, alcoxy, alcoxyalcoxy, alkenyloxy, acyloxy.

La nature de l'organopolysiloxane et donc les rapports entre les motifs siloxaniques (I) et (II) et la répartition de ceux-ci est comme on le sait choisie en fonction de l'application envisagée et en fonction du traitement de vulcanisation qui sera effectuée sur la composition.

Il peut ainsi s'agir de compositions vulcanisables à température élevée sous l'action de peroxydes organiques tels que le peroxyde de dichloro-2,4 benzoyle, le peroxyde de benzoyle, le perbenzoate de t-butyle, le peroxyde de cumyle, le peroxyde de di-t-butyle.

L'organopolysiloxane entrant dans de telles compositions est alors constitué essentiellement de motifs siloxaniques (I) et ne contient pas de groupes ou d'atomes hydrolysables.

Les polyméthylpolysiloxanes terminés par des groupements triméthylsilyles représentent un exemple particulièrement important de cette catégorie sur le plan industriel.

La vulcanisation peut être également effectuée à température ambiante ou à température modérée par création de réticulations entre des groupements vinylsilylés et des groupements hydrogénosilylés, la réaction d'hydrosilylation étant effectuée en présence de catalyseurs tels que les dérivés du platine. les organopolysiloxanes mis en oeuvre ne contiennent pas alors d'atomes ou de groupements hydrolysables.

La vulcanisation peut être effectuée sous l'action de l'humidité. Les organopolysiloxanes contenus dans les compositions de ce type contiennent des atomes ou des groupements hydrolysables tels que précédemment définis. Les motifs siloxaniques (II) contenant de tels groupements représentent au plus 15% en poids de la masse totale de l'organopolysiloxane mis en oeuvre. Les compositions organopolysiloxaniques de ce type contiennent généralement des catalyseurs tels que le sels d'étain.

La vulcanisation peut enfin être effectuée en présence d'agents de réticulation. Les organopolysiloxanes entrant dans ces compositions sont en général des polysiloxanes linéaires ramifiées ou réticulées constituées de motifs (I) et (II) dans lesquels Z est un groupement hydroxyle et où x est au moins égal à 1. L'agent de réticulation peut être un silane polyfonctionnel tels que le méthyltriacétoxysilane, l'isopropyltriacetoxysilane, le vinyltriacétoxysilane, le méthyltris(diéthylaminoxy)silane. Divers autres composés tels que les silicates peuvent être utilisés comme agents de réticulation.

Les compositions organosiliciques selon l'invention contiennent de 5 à 50% et de préférence de 10 à 40% de silices de précipitation éventuellement traitées telles que précédemment définies. Dans le cas des pates silicones, la proportion en silice de l'invention sera généralement comprise entre 3 et 20%.

En outre, en plus des polysiloxanes, de la silice précipitée éventuellement traitée, des agents de reticulation et des catalyseurs de reticulation, les compositions peuvent contenir des charges usuelles telles que du quartz pulvérisé, de la terre de diatomées, du talc, du noir du carbone, du carbonate. Les compositions peuvent en outre contenir des adjuvants divers usuels comme des agents antistructures, des stabilisants thermiques, des agents thixotropiques, des pigments, des inhibiteurs de corrosion.

Les agents antistructures, connus également sous la dénomination de plastifiants, sont en général de nature organosilicique et sont introduits à raison de 0 à 20 parties pour 100 parties de gomme organosilicique. Ils permettent d'éviter le durcissement des compositions lors du stockage. Parmi les agents antistructures on peut citer les silanes à groupements hydrolysables, ou des huiles diorganopolysiloxaniques hydroxylées ou alcoxylées de faible poids moléculaire. De telles compositions sont par exemples décrites dans le brevet français FR-A-1.111.969.

Parmi les stabilisants thermiques qui sont bien connus de l'homme de l'art on peut citer les sels, les oxydes et les hydroxydes de fer, de cérium ou de manganèse. Ces additifs qui peuvent être utilisés seuls ou en mélange sont en général introduits à raison de 0,01 à 5% par rapport au poids de la gomme organopolysiloxanique mise en oeuvre.

Les compositions organopolysiloxaniques sont préparées en mélangeant les divers ingrédients de la composition tels que précédemment décrits. Le mélange peut être effectué à température ambiante ou à chaud.

Des exemples vont maintenant être donnés.

## EXEMPLE 1

Cet exemple décrit la préparation d'un certain nombre de silices selon l'invention.

On part d'une silice sous forme de billes présentant les caractéristiques suivantes :

| | |
|---|---|
| surface CTAB : | 218 m²/g |
| surface BET : | 225 m²/g |
| taille moyenne : | 220 μm |
| densité : | 0,27 |
| reprise en eau : | 9,1%. |

On utilise un four rotatif en quartz de diamètre 80 mm, de longueur 1,3 m. Le temps de séjour est réglé par l'inclinaison du four. La vitesse de rotation du four est de 4,9 tr/min. On alimente la silice par une trémie et une vis sans fin avec un débit de 100 g/h.

On a fait varier le temps de séjour dans le four et la température.

Les résultats sont donnés dans le tableau 1 ci-dessous. On peut constater que le traitement thermique selon les conditions de l'invention et sur la silice de départ utilisée ne dégradent pas la surface spécifique.

Le pH des produits obtenus est de 5,7, la teneur en sodium résiduel est de 350 ppm, celle en carbone de 280 ppm. La taille moyenne et la densité avant micronisation sont celles données ci-dessus.

### TABLEAU 1

| Temps de séjour | T° ° C | Reprise en eau | CTAB m²/g | BET m2/g |
|---|---|---|---|---|
| 2'30" | 750 | 3,9 | 215 | 220 |
| 2'45" | 750 | 4,0 | 215 | 220 |
| 5'30" | 750 | 3,4 | 218 | 220 |
| 5'30" | 850 | 2,0 | 201 | 215 |
| 2'45" | 850 | 2,4 | 206 | 218 |
| 2'30 | 850 | 3,2 | 205 | 217 |

EP 0 280 623 B1

Après micronisation au JET-O-MIZER®, les produits présentent une densité de 0,09.

## EXEMPLE 2

On prépare une silice A selon l'invention en utilisant un four vibré, le traitement thermique ayant lieu à 850° C pendant 7'40". La silice de départ est une silice B sous forme de billes et présentant les caractéristiques suivantes :

surface CTAB : 174 m²/g
surface BET : 182 m²/g
taille moyenne : 190 μm
densité : 0,27
reprise en eau : 8,7%

On obtient la silice A qui après micronisation au JET-O-MIZER® présente les caractéristiques suivantes:

surface CTAB : 165 m²/g
surface BET : 175 m²/g
densité : 0,105
pH : 6,2
reprise en eau : 2,7%
teneur en carbone : 370 ppm.
sodium résiduel : 450 ppm.

## EXEMPLE 3

Cet exemple concerne les propriétés diélectriques par plaques pour des produits renforcés par les silices A et B décrites ci-dessus, par une silice de précipitation de l'art antérieur adaptée au renforcement des silicones, commercialisée par la société DEGUSSA sous la marque FK 160 décrite dans la publication SONDERDRUCK AUS KAUTSCHUK + GUMMI KUNSTOFFE − Fascicule 2.32 1979 pages 89-93 et présentant les caractéristiques suivantes : surface BET 160 m²/g, reprise en eau mesurée de la manière décrite plus haut 5,8%, et enfin par une silice de pyrogénation commercialisée par la société DEGUSSA sous la marque AEROSIL.

## Préparation de la composition organopolysiloxanique

Avec un malaxeur bicylindres de laboratoire, on mélange :
— 50 g d'une gomme polydiméthylsiloxanique
— 3,6 g d'agent antistructure
— 20 g de silice
La gomme polydiméthylsiloxanique est une gomme dévolatilisée renfermant 720 mg de groupement Si par kg et se terminant par des motifs triméthysiloxy. Sa viscosité à 25° est de $20.10^6$ centipoises et correspond à une masse en poids de l'ordre de $6.10^5$.
L'agent antistructure est un polydiméthylsiloxane $\alpha,\omega$ hydroxylé qui contient 8,3% d'hydroxyle.
Les silices utilisées sont celles mentionnées dans le paragraphe 1 ci-dessus.
Le mélange est réalisé en ajoutant la silice en 5 minutes par portions dans le polymère siloxanique ; le malaxage sur calandre est poursuivi pendant 15 minutes avant d'ajouter à la composition ainsi réalisée 0,25 cm³ de diméthyl-2,5 di(tertiobutylpéroxy)-2,5 hexane. Le mélange complet est alors homogénéisé pendant 5 minutes sur la même calandre.
Le mélange est alors disposé dans un moule conçu pour réaliser des éprouvettes de 2 mm d'épaisseur.
Le moule est préchauffé et la vulcanisation du mélange est ainsi réalisée en 10 minutes à 170°C sous presse 120 kg/cm².
Les élastomères sont étudiés en l'état et on mesure sur les échantillons obtenus la résistivité transversale $\rho$ qui tient compte du courant qui passe à travers l'isolant entre les électrodes de mesure et qui est indépendante des dimensions de cet isolant (pour un isolant $\rho$ varie de $10^2$ à $10^{16}$ Ω. cm environ). La mesure est réalisée suivant la norme NFC 26215.
On évalue aussi l'aptitude du mélange cru à bien s'extruder c'est-à-dire à ne pas donner lieu à formation de bulles lors de la vulcanisation du jonc extrudé dans un tunnel à air chaud, par la reprise en eau de ce mélange

7

préalablement séché.

Le séchage du mélange est effectué sur plaques calibrées à 2 mm, en étuve à vide chauffée à 170°C pendant 1 heure. La reprise en eau est ensuite mesurée par gravimétrie après séjour 15 jours dans une atmosphère contrôlée à 20°C, 100% d'humidité. La reprise d'humidité doit être aussi faible que possible pour que la composition siloxanique ne donne pas lieu à la formation de bulles par vaporisation de l'eau réadsorbée au cours du stockage du mélange.

Les résultats sont donnés dans le tableau 2.

TABLEAU 2

|  | Aérosil® | FK 160® | B | A |
|---|---|---|---|---|
| $\rho$ ($\Lambda$ . cm) | $10^{15}$ | $5.10^{13}$ | $2,5.10^{13}$ | $7.10^{14}$ |
| reprise en eau du mélange | 0,25 | 0,9 | 1,4 | 0,6 |

On voit que la silice de l'invention est celle qui se trouve la plus proche de la silice de pyrogénation, surtout en ce qui concerne la résistivité transversale.

**Revendications**

1. Procédé de préparation d'une silice à reprise en eau inférieure à 4,5%, caractérisé en ce qu'on fait subir à une première silice de précipitation un traitement thermique à une température comprise entre 700°C et 950°C pendant un temps compris entre une minute et 15 minutes.

2. Procédé selon la revendication 1 caractérisé en ce qu'on fait subir à ladite première silice une micronisation ou un broyage préalablement ou postérieurement au traitement thermique précité.

3. Procédé selon la revendication 1 ou 2, caractérisé en ce que ladite première silice se présente sous forme de billes sensiblement sphériques de taille moyenne comprise entre 80 μm et 300 μm.

4. Procédé selon la revendication 3, caractérisé en ce que la première silice précitée présente une densité à l'état tassée comprise entre 0,2 et 0,32, une surface BET comprise entre 100 et 350 m²/g, une surface CTAB comprise entre 100 et 350 m²/g.

5. Procédé selon l'une des revendications 3 ou 4, caractérisé en ce que la première silice précitée présente une taille moyenne comprise entre 150 μm et 300 μm, de préférence comprise entre 200 et 300 μm.

6. Procédé selon la revendication 3 caractérisé en ce que la première silice précitée présente une densité comprise entre 0,23 et 0,32.

7. Procédé selon l'une des revendications 1 à 6 caractérisé en ce que le traitement thermique a lieu à une température plus particulièrement comprise entre 800 et 900°C, et entre 700 et 900°C pour une première silice sous forme de billes.

8. Procédé selon l'une des revendications 1 à 7, caractérisé en ce que le traitement thermique est effectué pendant un temps compris entre deux et dix minutes.

9. Silice de précipitation, du type pouvant être préparée par le procédé selon l'une quelconque des revendications 1 et 3 à 8, présentant les caractéristiques suivantes :

— surface BET : 100-350 m²/g
— surface CTAB : 100-350 m²/g
— reprise en eau : < 4,5%

ladite silice se présentant en outre sous forme de billes sensiblement sphérique de taille moyenne comprise entre 80 µm et 300 µm.

10. Silice selon la revendication 9 caractérisée en ce qu'elle présente une taille moyenne de particules comprise entre 150 µm et 300 µm, de préférence comprise entre 200 et 300 µm.

11. Silice selon la revendication 9 ou 10, caractérisé en ce qu'elle présente une teneur en eau d'au plus 3,5%.

12. Silice selon la revendication 9, 10 ou 11, caractérisée en ce qu'elle présente une densité comprise entre 0,23 et 0,32.

13. Silice selon l'une quelconque des revendications 9 à 12, caractérisée en ce qu'elle présente une teneur en carbone inférieure à 2500 ppm et plus particulièrement inférieure à 500 ppm.

14. Silice selon l'une quelconque des revendications 9 à 13, caractérisée en ce qu'elle présente une teneur en sodium résiduel d'au plus 1500 ppm.

15. Silice de précipitation, du type pouvant être préparé par le procédé selon l'une quelconque des revendication 1 à 8, présentant les caractéristiques suivantes :

— surface BET : 135-350 m²/g
— surface CTAB : 150-350 m²/g
— reprise en eau : < 4,5%.

16. Silice selon la revendication 15, caractérisé en ce qu'elle présente un rapport surface BET/surface CTAB compris entre 0,9 et 1,2.

17. Silice selon la revendication 15 ou 16, caractérisé en ce qu'elle présente une teneur en carbone inférieur à 2500 ppm et plus particulièrement inférieure à 500 ppm.

18. Silice selon l'une des revendications 15 à 17, caractérisé en ce qu'elle présente une teneur en sodium résiduel d'au plus 1500 ppm.

19. Silice selon l'une des revendications 15 à 18 caractérisée en ce qu'elle présente une reprise en eau d'au plus 3,5%.

20. Silice selon l'une des revendications 15 à 19 caractérisée en ce qu'elle présente une densité d'au plus 0,3, plus particulièrement d'au plus 0,15.

21. Silice selon l'une des revendications 15 à 20, caractérisée en ce qu'elle présente un pH compris entre 3,5 et 7,5, plus particulièrement 4,5-6,5.

22. Silice selon l'une quelconque des revendications 15 à 21, caractérisé en ce qu'elle présente une taille de particules estimée par refus au tamis de 45 µm inférieure ou égale à 0,05%.

23. Procédé de renforcement de compositions organopolysiloxaniques, caractérisé en ce qu'on utilise une silice selon l'une des revendications 15 à 22 ou une silice obtenue par un procédé selon l'une quelconque des revendications 1 à 8.

24. Composition organopolysiloxanique caractérisée en ce qu'elle comprend une silice selon l'une des revendications 15 à 22 ou une silice obtenue par un procédé selon l'une quelconque des revendications 1 à 8.

## Patentansprüche

1. Verfahren zur Herstellung eines Siliciumdioxids mit einer Wasseraufnahme von weniger als 4,5%, dadurch gekennzeichnet, daß man ein erstes gefälltes Siliciumdioxid während einer Zeitdauer zwischen einer und fünfzehn Minuten einer thermischen Behandlung bei einer Temperatur zwischen 700 und 950°C unterzieht.

2. Verfahren nach Anspruch 1, dadurch gekennzeichnet, daß man dieses erste Siliciumdioxid vor oder nach der thermischen Behandlung einer Mikronisierung oder einem Mahlvorgang unterzieht.

3. Verfahren nach Anspruch 1 oder 2, dadurch gekennzeichnet, daß das erste Siliciumdioxid die Form von annähernd kugelförmigen Körpern mit einer mittleren Größe zwischen 80 und 300 µm aufweist.

4. Verfahren nach Anspruch 3, dadurch gekennzeichnet, daß das erste Siliciumdioxid eine Dichte im verdichteten Zustand zwischn 0,2 und 0,32, eine BET-Oberfläche zwischen 100 und 350 m²/g und eine CTAB-Oberfläche zwischen 100 und 350 m²/g aufweist.

5. Verfahren nach Anspruch 3 oder 4, dadurch gekennzeichnet, daß das erste Siliciumdioxid eine mittlere Größe zwischen 150 und 300 µm und vorzugsweise zwischen 200 und 300 µm aufweist.

6. Verfahren nach Anspruch 3, dadurch gekennzeichnet, daß das erste Siliciumdioxid eine Dichte zwischen 0,23 und 0,32 aufweist.

7. Verfahren nach einem der Ansprüche 1 bis 6, dadurch gekennzeichnet, daß die thermische Behandlung bei einer Temperatur von insbesondere zwischen 800 und 900°C und mit einem ersten kugelförmigen Siliciumdioxid zwischen 700 und 900°C stattfindet.

8. Verfahren nach einem der Ansprüche 1 bis 7, dadurch gekennzeichnet, daß die thermische Behandlung während einer Zeitdauer zwischen 2 und 10 Minuten durchgeführt wird.

9. Gefälltes Siliciumdioxid des Typs, der durch das Verfahren nach einem der Ansprüche 1 und 3 bis 8 hergestellt sein kann und die folgenden Parameter aufweist

— BET-Oberfläche :    100-350 m²/g
— CTAB-Oberfläche :   100-350 m²/g
— Wasseraufnahme :   < 4,5%

und das Siliciumdioxid außerdem die Form von annähernd kugelförmigen Körpern mit einer mittleren Größe zwischen 80 und 300 µm hat.

10. Siliciumdioxid nach Anspruch 9, dadurch gekennzeichnet, daß es eine mittlere Teilchengröße zwischen 150 und 300 µm und vorzugsweise zwischen 200 und 300 µm aufweist.

11. Siliciumdioxid nach Anspruch 9 oder 10, dadurch gekennzeichnet, daß es einen Wassergehalt von höchstens 3,5% aufweist.

12. Siliciumdioxid nach einem der Ansprüche 9, 10 oder 11, dadurch gekennzeichnet, daß es eine Dichte zwischen 0,23 und 0,32 aufweist.

13. Siliciumdioxid nach einem der Ansprüche 9 bis 12, dadurch gekennzeichnet, daß es einen Kohlenstoffgehalt von weniger als 2500 ppm und insbesondere von weniger als 500 ppm aufweist.

14. Siliciumdioxid nach einem der Ansprüche 9 bis 13, dadurch gekennzeichnet, daß es einen Restnatriumgehalt von höchstens 1500 ppm aufweist.

15. Gefälltes Siliciumdioxid des Typs, der durch das Verfahren nach einem der Ansprüche 1 bis 8 hergestellt sein kann und die folgenden Parameter aufweist

— BET-Oberfläche :    135-350 m²/g
— CTAB-Oberfläche :   150-350 m²/g
— Wasseraufnahme :   < 4,5%.

16. Siliciumdioxid nach Anspruch 15, dadurch gekennzeichnet, daß es ein Verhältnis von BET-Oberfläche/ CTAB-Oberfläche zwischen 0,9 und 1,2 aufweist.

17. Siliciumdioxid nach Anspruch 15 oder 16, dadurch gekennzeichnet, daß es einen Kohlenstoffgehalt von weniger als 2500 ppm und insbesondere von weniger als 500 ppm aufweist.

18. Siliciumdioxid nach einem der Ansprüche 15 bis 17, dadurch gekennzeichnet, daß es einen Restnatriumgehalt von höchstens 1500 ppm aufweist.

19. Siliciumdioxid nach einem der Ansprüche 15 bis 18, dadurch gekennzeichnet, daß es eine Wasseraufnahme von höchstens 3,5% aufweist.

20. Siliciumdioxid nach einem der Ansprüche 15 bis 19, dadurch gekennzeichnet, daß es eine Dichte von höchstens 0,3 und insbesondere von höchstens 0,15 aufweist.

21. Siliciumdioxid nach einem der Ansprüche 15 bis 20, dadurch gekennzeichnet, daß es einen pH-Wert zwischen 3,5 und 7,5 und insbesondere von 4,5 bis 6,5 aufweist.

22. Siliciumdioxid nach einem der Ansprüche 15 bis 21, dadurch gekennzeichnet, daß es eine Teilchengröße aufweist, die durch den Rückstand eines 45 µm-Siebes von kleiner oder gleich 0,05% bestimmt ist.

23. Verfahren zur Verstärkung von Organopolysiloxan-Zusammensetzungen, dadurch gekennzeichnet, daß man ein Siliciumdioxid nach einem der Ansprüche 15 bis 22 oder ein Siliciumdioxid verwendet, das durch ein Verfahren nach einem der Ansprüche 1 bis 8 erhalten wurde.

24. Organopolysiloxan-Zusammensetzung, dadurch gekennzeichnet, daß sie ein Siliciumdioxid nach einem der Ansprüche 15 bis 22 oder ein Siliciumdioxid enthält, das durch ein Verfahren nach einem der Ansprüche 1 bis 8 erhalten wurde.

## Claims

1. Process for the preparation of a silica with a water absorption below 4.5%, characterized in that a first precipitation silica undergoes a heat treatment at a temperature between 700°C and 950°C for a time between 1 and 15 minutes.

2. Process according to claim 1, characterized in that said first silica undergoes micronization or grinding before or after the aforementioned heat treatment.

3. Process according to claims 1 or 2, characterized in that said first silica is in the form of substantially spherical balls with an average size between 80 and 300 μm.

4. Process according to claim 3, characterized in that the first silica has a density in the tamped state between 0.2 and 0.32, a BET surface between 100 and 350 m²/g and a CTAB surface between 100 and 350 m²/g.

5. Process according to one of the claims 3 or 4, characterized in that the first silica has an average particle size between 150 and 300 μm and preferably between 200 and 300 μm.

6. Process according to claim 3, characterized in that the first silica has a density between 0.23 and 0.32.

7. Process according to one of the claims 1 to 6, characterized in that the heat treatment takes place more particularly at a temperature between 800 and 900°C and between 700 and 900°C for a first silica in the form of balls.

8. Process according to one of the claims 1 to 7, characterized in that the heat treatment takes place for a time between two and ten minutes.

9. Precipitation silica of the type which can be prepared by the process according to any one of the claims 1 and 3 to 8 and having the following characteristics :

| | |
|---|---|
| BET surface : | 100-350 m²/g |
| CTAB surface : | 100-350 m²/g |
| water absorption : | < 4.5% |

said silica also being in the form of substantially spherical balls with an average size between 80 and 300 μm.

10. Silica according to claim 9, characterized in that it has an average particle size between 150 and 300 μm and preferably between 200 and 300 μm.

11. Silica according to claims 9 or 10, characterized in that it has a water content of at the most 3.5%.

12. Silica according to claims 9, 10 or 11, characterized in that it has a density between 0.23 and 0.32.

13. Silica according to any one of the claims 9 to 12, characterized in that it has a carbon content below 2500 ppm and more particularly below 500 ppm.

14. Silica according to any one of the claims 9 to 13, characterized in that it has a residual sodium content of at the most 1500 ppm.

15. Precipitation silica of the type which can be prepared by the process according to any one of the claims 1 to 8 and having the following characteristics :

| | |
|---|---|
| BET surface : | 135-350 m²/g |
| CTAB surface : | 150-350 m²/g |
| water absorption : | < 4.5% |

16. Silica according to claim 15, characterized in that it has a BET/CTAB surface ratio between 0.9 and 1.2.

17. Silica according to claims 15 or 16, characterized in that it has a carbon content below 2500 ppm and more particularly below 500 ppm.

18. Silica according to any one of the claims 15 to 17, characterized in that it has a residual sodium content of at the most 1500 ppm.

19. Silica according to any one of the claims 15 to 18, characterized in that it has a water absorption of at the most 3-5%.

20. Silica according to any one of the claims 15 to 19, characterized in that it has a density of at the most 0.3% and more particularly at the most 0.15%.

21. Silica according to any one of the claims 15 to 20, characterized in that it has a pH between 3-5 and 7.5 and more particularly 4.5 and 6.5.

22. Silica according to any one of the claims 15 to 21, characterized in that it has a particle size estimated by the oversize for a 45 μm sieve equal to or below 0.05%.

23. Process for reinforcing organopolysiloxane compositions, characterized in that use is made of a silica according to one of the claims 15 to 22 or a silica obtained by a process according to any one of the claims 1 to 8.

24. Organopolysiloxane composition, characterized in that it comprises a silica according to one of the claims 15 to 22 or a silica obtained by a process according to any one of the claims 1 to 8.